(19) Europäisches Patentamt
European Patent Office
Office européen des brevets

(11) Veröffentlichungsnummer: **0 110 079**
**B2**

(12) # NEUE EUROPÄISCHE PATENTSCHRIFT

(45) Veröffentlichungstag der neuen Patentschrift: **14.06.89**

(51) Int. Cl.⁴: **C 04 B 7/36**

(21) Anmeldenummer: **83110215.7**

(22) Anmeldetag: **13.10.83**

(54) **Verfahren zur Herstellung von Zement aus schadstoffhaltigem Rohmaterial, insbesondere aus schwefel-, alkali- und/oder chlorhaltigem Rohmaterial.**

(30) Priorität: **30.11.82 DE 3244241**

(43) Veröffentlichungstag der Anmeldung: **13.06.84 Patentblatt 84/24**

(45) Bekanntmachung des Hinweises auf die Patenterteilung: **22.01.86 Patentblatt 86/4**

(45) Bekanntmachung des Hinweises auf die Entscheidung über den Einspruch: **14.06.89 Patentblatt 89/24**

(84) Benannte Vertragsstaaten: **BE DE FR GB IT**

(56) Entgegenhaltungen:
**AT-B- 280 138**
**DE-A- 2 759 249**
**DE-A- 2 815 161**
**DE-B- 1 471 371**
**DE-C- 2 166 471**

**DUDA, Cement-Data-Book, 1976, S. 335**

(73) Patentinhaber: **KRUPP POLYSIUS AG, Graf-Galen-Strasse 17, D-4720 Beckum (DE)**

(72) Erfinder: **Goldmann, Wolf, Dipl.-Ing., Agnes-Miegel-Strasse 9, D-4720 Beckum (DE)**

(74) Vertreter: **Tetzner, Volkmar, Dr.-Ing. Dr. jur., Van-Gogh-Strasse 3, D-8000 München 71 (DE)**

**EP 0 110 079 B2**

**Beschreibung**

Die Erfindung betrifft ein Verfahren entsprechend dem Oberbegriff des Anspruches 1.

Bei der Herstellung von Zement aus schwefelhaltigem Rohmaterial kann der Schwefel vor allem in folgenden Bindungen vorliegen:

| | |
|---|---|
| $CaSO_4 \cdot 2H_2O$ | (Gips) |
| $CaSO_4$ | (Anhydrit) |
| $MgSO_4 \cdot 2H_2O$ | (Kieserit) |
| $BaSO_4$ | (Schwerspat) |
| $FeS_2$ | (Pyrit, Markasit) |
| PbS | (Bleiglanz) |
| ZnS | (Zinkblende) |
| Organische Verbindungen | |

In allen Fällen entsteht aus diesen Verbindungen unter Wärmeeinwirkung $SO_2$, beispielsweise nach

$$4FeS_2 + 11\,O_2 = 2\,Fe_2O_3 + 8\,SO_2 \text{ oder}$$
$$CaSO_4 = CaO \pm SO_2 + 1/2\,O_2$$

In der Gasatmosphäre des Drehrohrofens bildet sich aus dem gasförmig vorliegenden $SO_2$ und dem gleichfalls in der Gasatmosphäre vorhandenen verdampften Alkalioxid unter Sauerstoffaufnahme Alkalisulfat:

$$Na_2O + SO_2 + 1/2\,O_2 = Na_2SO_4$$
$$K_2 + SO_2 + 1/2\,O_2 = K_2SO_4$$

Ist der Alkaligehalt in der Gasatmosphäre des Drehrohrofens zu gering, um alles $SO_2$ zu binden, so entsteht in den heisseren Zonen des Drehrohrofens Calciumsulfat:

$$CaO + SO_2 + 1/2\,O_2 = CaSO_4$$

Bei weiterem Überschuss von $SO_2$ erfolgt schliesslich im Drehrohrofen und im Vorwärmer eine Reaktion mit dem $CaCO_3$:

$$CaCO_3 + SO_2 + 1/2\,O_2 = CaSO_4 + CO_2$$

Die Alkalisulfate kondensieren in den weniger heissen Zonen des Drehrohrofens und im Vorwärmer auf dem Brenngut und wandern zusammen mit dem im Brenngut gebildeten Calciumsulfat zurück zur Sinterzone. Eine geringe Menge $SO_2$ wird über das den Vorwärmer verlassende Gas ausgetragen. Der grösste Teil gelangt jedoch auf dem geschilderten Wege wieder in die Sinterzone. Dort geht der meiste Schwefel in Form von $SO_2$ in die Gasphase und wandert mit dem Ofengas entgegen der Bewegungsrichtung des Gutes. Nur ein Teil des Schwefels wird in Abhängigkeit von der Flüchtigkeit mit dem Klinker ausgetragen.

Bei Verwendung von schwefelhaltigem Rohmaterial kommt es somit zu einem ausgeprägten Schwefelkreislauf in der Anlage, der zu erheblichen Ansatzproblemen vor allem im Einlaufbereich des Drehrohrofens führen kann. Um Betriebsstörungen zu vermeiden, versucht man, den Schwefelkreislauf dadurch zu verringern, dass eine Teilmenge des schwefelhaltigen Gasstromes aus der Anlage abgezogen wird. Dies erfolgt bisher, indem ein Teilstrom der Ofenabgase nach Verlassen des Drehrohrofens (d.h. noch vor Eintritt in die unterste Stufe des Zyklonvorwärmers) abgezweigt wird. Diese Massnahme wird im übrigen auch dann vorgesehen, wenn ein bestimmter Schwefelgehalt im Klinker nicht überschritten werden darf.

Ähnliche Probleme ergeben sich bei der Herstellung von Zement aus alkali- und/oder chlorhaltigen Rohmaterialien. Auch hier versucht man bisher, einen unerwünschten Alkali- oder Chlorkreislauf durch Abziehen eines Teilstromes der Ofenabgase (By-pass-Strom) nach Verlassen des Drehrohrofens zu verringern.

Um eine bestimmte Staubmenge aus den Ofenabgasen vor dem Eintritt in den Vorerhitzer zu entfernen, ohne die Wirtschaftlichkeit der Anlage wesentlich herabzusetzen, und um gleichzeitig auch die schädlichen Wirkungen eines unerwünschten Überschusses an Alkali- und/oder Chlorverbindungen im Rohmehl zu verringern, ist es bei einem Verfahren der im Oberbegriff des Anspruches 1 vorausgesetzten Art (DUDA, Cement-Data-Book, 1976, S. 334, 335) bekannt, einen Teilstrom der Abgase des Drehrohrofens unmittelbar nach dem Austritt aus dem Drehrohrofen (d.h. noch vor Eintritt in die unterste Stufe des Zyklonvorwärmers) abzuzweigen, durch Entstaubung von den im Gasstrom mitgeführten, schadstoffhaltigen Gutteilchen zu befreien und dann den Teilstrom wieder mit dem Hauptgasstrom zu vereinen oder über einen gesonderten Elektrofilter in die Atmosphäre zu entlassen. Die aus dem abgezweigten Teilgasstrom abgeschiedenen, schadstoffhaltigen Gutteilchen werden hierbei im allgemeinen verworfen.

In ähnlicher Weise ist es bekannt (AT-B-280 138), einen geringen Teil des mit den Ofenabgasen mitgerissenen, alkali- und/oder chloridhaltigen Staubes kontinuierlich bei Austritt der Ofenabgase abzutrennen, die auf diese Weise zum Teil entstaubten Abgase direkt dem Vorerhitzer zuzuführen und den abgetrennten Staub teilweise zu verwerfen und im übrigen in den Vorerhitzer oder in den Ofen zurückzuführen.

Um ferner Alkaliverbindungen in verwendbarer Form zu gewinnen, ist es auch bekannt, die Ofenabgase unmittelbar nach dem Austritt aus dem Ofen noch vor dem Niederschlagen, Binden und Abtrennen der Alkaliverbindungen von mitgerissenem Ofenstaub zu befreien und den abgeschiedenen Staub gegebenenfalls sogleich in den Ofen zurückzuführen (DE-B-1 471 371).

Es ist weiterhin ein Verfahren zur Herstellung von Zement aus schadstoffhaltigem Rohmaterial bekannt (DE-C-21 66 471), das einen herkömmlichen Vorwärmer und einen Drehrohrofen verwendet, wobei die Abgase des Drehrohrofens den Vorwärmer durchsetzen und zur Verringerung eines Schadstoffkreislaufes eine Teilmenge des schadstoffhaltigen Gas- oder Gutstromes

zwischen dem Drehrohrofen und dem Vorwärmer aus der Anlage abgezogen wird.

Schliesslich ist ein Verfahren zur Herstellung eines hydraulischen Bindemittels bekannt (DE-A-28 15 161), bei dem bei der Zementklinker-Produktion ein Anteil des Rohmaterials an mindestens einer Stelle des Vorwärmers abgezogen wird. Dieser Abzug dient dabei der Entnahme von Material mit unterschiedlichem Entsäuerungsgrad zur Herstellung von Putz- und Mauermörtel.

Der Erfindung liegt die Aufgabe zugrunde, ein Verfahren entsprechend dem Oberbegriff des Anspruches 1 dahin weiterzuentwickeln, dass die gewünschte Verringerung des Schadstoffgehaltes (d.h.die Verkleinerung des Schwefel-, Alkali- oder Chlorkreislaufes) bei einem Optimum von Wärmeverlust sowie Anlage- und Betriebskosten erreicht wird.

Diese Aufgabe wird durch die kennzeichnenden Merkmale des Anspruches 1 gelöst.

Der Erfindung liegt die Erkenntnis zugrunde, dass die Art der Bindung des im Rohrmaterial enthaltenen Schadstoffes ausschlaggebend dafür ist, bei welcher Temperatur bzw. an welcher Stelle der Anlage die Schadstoffe freigesetzt werden. So erfolgt bei pyrithaltigem Rohmaterial die Oxidation des Schwefels bei ca. 400 bis 600°C, während des $SO_2$ aus dem Calciumsulfat bei ca. 900 bis 1000°C entsteht. Je nach der Art des Rohmateriales und der Art der Schwefelbindung im Rohmaterial tritt somit die maximale Schwefelkonzentration im Gas bzw. Gut an unterschiedlicher Stelle der Anlage auf. Das bisher übliche Abziehen eines Teiles der Ofenabgase oder eines Teiles des Gutstroms zwischen Drehrohrofen und unterstem Zyklon erweist sich daher in vielen Fällen nicht als optimal. Erfindungsgemäss wird demgegenüber der Abzug der Teilmenge des schadstoffhaltigen Gas- oder Gutstromes an einer Stelle mit hoher Schadstoffkonzentration, aber möglichst geringer Temperatur, vorgenommen. Bei der Wahl der Abzugsstelle sind weiterhin die jeweiligen Anlage- und Betriebskosten zu berücksichtigen.

Diese und weitere Einzelheiten der Erfindung gehen aus den Unteransprüchen sowie aus der folgenden Beschreibung einiger in der Zeichnung veranschaulichter Ausführungsbeispiele hervor.

Fig. 1 zeigt in schematischer Form eine Anlage mit einem vier Zyklone 1, 2, 3, 4 enthaltenden vierstufigen Zyklonvorwärmer und einem Drehrohrofen 5. Diese Anlagenteile sind in bekannter Weise über ihre Gas- und Gutleitungen miteinander verbunden, wobei die Abgase des Drehrohrofens 5 nacheinander die Zyklone 1, 2, 3 und 4 des Zyklonvorwärmers durchsetzen, während das Rohmaterial im Gegenstrom zum Gas nacheinander die Zyklone 4, 3, 2 und 1 durchsetzt, ehe es in den Drehrohrofen 5 gelangt.

Es sei nun angenommen, dass der Anlage gemäss Fig. 1 pyrithaltiges Rohmaterial aufgegeben wird. Bestimmt man die an den einzelnen Stellen des Vorwärmers im Gas- und Gutstrom auftretenden Mengen an Schwefel (ausgedrückt in kg $SO_3$/kg Klinker), so ergeben sich die in Fig. 1 eingetragenen Zahlenwerte. Dabei handelt es sich bei den Zahlenwerten der Stellen A, B, C, D und E um den Schwefelgehalt des Gasstromes und bei den Zahlenwerten der Stellen F, G, H, I und K um den Schwefelgehalt des Gutes.

Würde man nun in üblicher Weise eine Teilmenge des Ofenabgasstromes an der Stelle A abziehen, so würden hierbei pro 1% Bypassgas (bezogen auf die Gasmenge am Einlauf des Drehrohrofens) ca. 0,00046 kg $SO_3$/kg Klinker abgeführt. Da die Temperatur des Gases an dieser Stelle 1000 bis 1200°C betragen kann und mit dem Gas hoch entsäuertes Gut weggeführt wird, bedeutet das einen Wärmeverlust von ca. 25 bis 35 kJ/kg Klinker pro 1% Bypassgas.

Erfindungsgemäss gibt es demgegenüber für eine wirtschaftlichere Lösung zwei Alternativen:

Verringert man den Schwefelkreislauf durch Abzug einer Teilmenge des Gasstromes, so zweigt man diesen Bypassstrom zweckmässig an der Stelle C, d.h. nach dem zweituntersten Zyklon ab. An dieser Stelle ist nach der Stelle A die höchste Schwefelkonzentration im Gasstrom zu finden. Da hier jedoch nur eine Gastemperatur von ca. 600°C herrscht, ergibt sich pro 1% Bypassgas nur ein Wärmeverlust von ca. 17 kJ/kg Klinker.

Verringert man den Schwefelkreislauf durch Abzug einer Teilmenge des schwefelhaltigen Gutstromes, so erfolgt der Abzweig dieser Teilmenge zweckmässig an der Stelle H, d.h. nach der dritten Zyklonstufe von unten (Zyklon 3). An dieser Stelle herrscht zwar eine geringfügig kleinere Schwefelkonzentration als an der Stelle F, jedoch ist die Guttemperatur erheblich niedriger. Bei gleicher Reduzierung des Schwefelkreislaufes um ca. 0,00046 kg $SO_3$/kg Klinker bedeutet das einen Wärmeverlust von lediglich ca. 7 kJ/kg Klinker. Hierbei muss allerdings viermal mehr Material als bei der vorstehend genannten Alternative (mit Gasabzug und Verlust von im abgezogenen Gas enthaltenen Gut) verworfen werden, wobei die zusätzlichen Mahlkosten verloren gehen. Andererseits spart man hierbei die Investition und Unterhaltung eines Filters für die Entsorgung des Gases, was bei der erstgenannten Alternative notwendig ist.

Verglichen mit dem bekannten Verfahren wird bei beiden Alternativen des erfindungsgemässen Verfahrens der Schwefelkreislauf mehr entlastet und der Wärmeverlust wesentlich verringert.

Fig. 2 veranschaulicht die Verhältnisse bei Aufgabe von Rohmaterial mit organisch gebundenem Schwefel. Der an den einzelnen Stellen der Anlage im Gas- und Gutstrom bestimmte Schwefelgehalt (ausgedrückt in kg $SO_3$/kg Klinker) ist als Zahlenwert an den einzelnen Stellen A bis K der Anlage vermerkt.

Gegenüber dem herkömmlichen Bypass am Ofeneinlauf (d.h. an der Stelle A) mit einem Wärmeverlust von 25 bis 35 kJ/kg Klinker pro 1% Bypassmenge bieten sich wiederum zwei Möglichkeiten an:

Eine Möglichkeit besteht in herkömmlicher Weise darin, ca. 0,015 kg Gut/kg Klinker aus der

Gutaustragsleitung des Zyklons 1, d.h. an der Stelle F, abzuziehen. Hierbei ergibt sich ein Wärmeverlust von lediglich ca. 12 kJ/kg Klinker.

Eine zweite erfindungsgemässe Möglichkeit besteht darin, 0,025 kg Gut/kg Klinker aus der Gutaustragsleitung des Zyklons 2, d.h. an der Stelle G, abzuführen. Hierbei ergibt sich ein Wärmeverlust von ca. 16 kJ/kg Klinker. Dieses Material ist weniger entsäuert als an der Stelle F, so dass eine Gutschrift von ca. 2 kJ/kg Klinker gemacht werden kann. An der Stelle G ist zwar ferner mehr Material als an der Stelle F zu verwerfen, jedoch ist das Gut der Stelle G mit einer Temperatur von ca. 600°C wesentlich einfacher zu behandeln als Gut der Stelle F mit einer Temperatur von ca. 760°C.

Fig. 3 zeigt die Verhältnisse bei der Herstellung von Zement aus alkalihaltigem Rohmaterial. Als Zahlenwerte sind an den Stellen A, B, C, D und E der $K_2O$-Gehalt (in kg $K_2O$/kg Klinker) des Gasstromes und an den Stellen F, G, H, I und K der $K_2O$-Gehalt des Gutes aufgetragen. Mit einem konventionellen Bypass (Abzug eines Teilstromes der Ofenabgase an der Stelle A) werden hier 0,00141 kg $K_2O$/kg Klinker pro 1% Bypass abgeführt.

Demgegenüber kann dieselbe Entlastung des Alkalikreislaufes wie folgt erreicht werden:

- entweder herkömmlich durch Abführen von 0,0193 kg Gut/kg Klinker von der Stelle F (Wärmeverlust ca. 15 kJ/kg Klinker),
- oder erfindungsgemäss durch Abführen von 0,0328 kg Gut/kg Klinker von der Stelle G (Wärmeverlust ca. 21 kJ/kg Klinker),

Bei der zweiten Alternative ist das Gut wegen der geringeren Temperatur und geringeren Entsäuerung einfacher zu behandeln.

Im Falle der Fig. 3 wäre dagegen ein Gas-Bypass im Vorwärmer ungünstiger (so würde an der Stelle B ein Wärmeverlust von ca. 48 kJ/kg Klinker eintreten).

Fig. 4 zeigt ein weiteres Beispiel für die Herstellung von Zement aus alkalihaltigem Rohmaterial. Die Zahlenwerte bedeuten den Gehalt des Gas- bzw. Gutstromes an kg $K_2O$/kg Klinker. Mit einem konventionellen Bypass an der Stelle A könnten 0,000875 kg $K_2O$/kg Klinker pro 1% Bypass-Gas entfernt werden.

Statt dessen bestehen erfindungsgemäss folgende Alternativen:

- Zieht man an der Stelle B einen Gas-Bypass-Strom von 0,018 8 $Nm^3$/kg Klinker ab, so sind die Wärmeverluste mit ca. 27 kJ/kg Klinker und die Materialverluste geringer als beim konventionellen Bypass.
- Auch durch Abführen von 0,026 4 kg Gut/kg Klinker aus dem Gutstrom an der Stelle G sind die Wärmeverluste mit 17 kJ/kg Klinker niedriger als beim konventionellen Verfahren.

Fig. 5 veranschaulicht schliesslich ein Beispiel für die Herstellung von Zement aus chlorhaltigem Rohmaterial. Die Zahlenwerte bedeuten den Chlorgehalt an den Punkten der Anlage (ausgedrückt in kg Cl/kg Klinker). Bei herkömmlicher Betriebsweise wird der Chlorkreislauf pro 1% Bypass-Gas an der Stelle A um 0,00097 kg Cl/kg Klinker entlastet. Dieselbe Entlastung wird erfindungsgemäss erreicht durch Entnahme von 0,0521 kg Gut/kg Klinker an der Stelle G, wobei der Wärmeverlust von 33 kJ/kg Klinker mit der konventionellen Entnahme vergleichbar ist.

## Patentansprüche

1. Verfahren zur Herstellung von Zement aus schadstoffhaltigem Rohmaterial, insbesondere aus schwefel-, alkali- und/oder chlorhaltigem Rohmaterial, unter Verwendung eines mehrstufigen Zyklonvorwärmers und eines Drehrohrofens, wobei die Abgase des Drehrohrofens den Zyklonvorwärmer durchsetzen und zur Verringerung eines Schadstoffkreislaufes eine Teilmenge des schadstoffhaltigen Gas- oder Gutstromes aus der Anlage abgezogen wird, dadurch gekennzeichnet, dass die Teilmenge des schadstoffhaltigen Gas- oder Gutstromes aus einer Gasleitung zwischen den Zyklonen des Zyklonvorwärmers bzw. aus einer Gutleitung zwischen den Zyklonen abgezogen wird, wobei diejenige Abzugsstelle gewählt wird, an der sich für die gewünschte Verringerung des Schadstoffgehaltes ein Optimum von Wärmeverlust sowie Anlage- und Betriebskosten ergibt.

2. Verfahren nach Anspruch 1, dadurch gekennzeichnet, dass die aus der Anlage zu entfernende Teilmenge des schadstoffhaltigen Gasstromes nach der untersten Zyklonstufe (Stelle B) abgezogen wird.

3. Verfahren nach Anspruch 1, dadurch gekennzeichnet, dass die aus der Anlage zu entfernende Teilmenge des schadstoffhaltigen Gasstromes nach der zweituntersten Zyklonstufe (Stelle C) abgezogen wird.

4. Verfahren nach Anspruch 1, dadurch gekennzeichnet, dass die aus der Anlage zu entfernende Teilmenge des schadstoffhaltigen Gutstromes nach der zweituntersten Zyklonstufe (Stelle G) abgezogen wird.

## Claims

1. Process for manufacturing cement from raw material containing noxious substances, especially from raw material containing sulphur, alkalis and/or chlorine, using a multi-stage cyclone preheater and a rotary kiln, in which the exhaust gases from the rotary kiln pass through the cyclone preheater and a part of the noxious gas or material stream in withdrawn from the system in order to reduce the circulation of noxious substances, characterized in that said part of the noxious gas or material stream is withdrawn from a gas pipe between the cyclones of the cyclone preheater or from a material pipe between the cyclones, the point of withdrawal being chosen such that an optium of heat loss and construction and operating costs are obtained with the desired reduction in the content of noxious substances.

2. Method as claimed in claim 1, characterized in that the part of the noxious gas stream is withdrawn from the system after the lowest cyclone stage (point B).

3. Method as claimed in claim 1, characterized in that the part of the noxious material stream is withdrawn from the system after the second lowest cyclone stage (point C).

4. Method as claimed in claim 1, characterized in that the part of the noxious material stream in withdrawn from the system after the second lowest cyclone stage (point G).

**Revendications**

1. Procédé de fabrication de ciment à partir de matières premières contenant des produits nocifs, notamment à partir de matières premières contenant du soufre, des alcalis et/ou du chlore, au moyen d'un réchauffeur à cyclones à plusieurs étages et d'un four tubulaire rotatif, les gaz d'échappement du four tubulaire passant dans le réchauffeur à cyclones et une fraction du courant de gaz ou du courant de matière contenant des produits nocifs étant soutirée de l'installation afin de restreindre le circuit des produits nocifs, caractérisé en ce que la fraction du courant de gaz ou du courant de matière contenant des produits nocifs est soutirée sur une canalisation des gaz située les cyclones du réchauffeur ou sur une canalisation de la matière qui est située entre les cyclones, le point de soutirage adopté étant celui auquel la perte de chaleur ainsi que les frais d'installation et d'exploitation atteignent un optimum pour la restriction souhaitée de la teneur en produits nocifs.

2. Procédé selon la revendication 1, caractérisé en ce que la fraction du courant de gaz contenant des produits nocifs et devant être évacuée de l'installation est soutirée en aval de l'étage inférieur du réchauffeur à cyclones (emplacement B).

3. Procédé selon la revendication 1, caractérisé en ce que la fraction du courant de gaz contenant des produits nocifs et devant être évacuée de l'installation est soutirée en aval de l'avant dernier étage inférieur du réchauffeur à cyclones (emplacement C).

4. Procédé selon la revendication 1, caractérisé en ce que la fraction du courant de matière contenant des produits nocifs et devant être évacuée de l'installation est soutirée en aval de l'avant dernier étage inférieur du réchauffeur à cyclones (emplacement G).

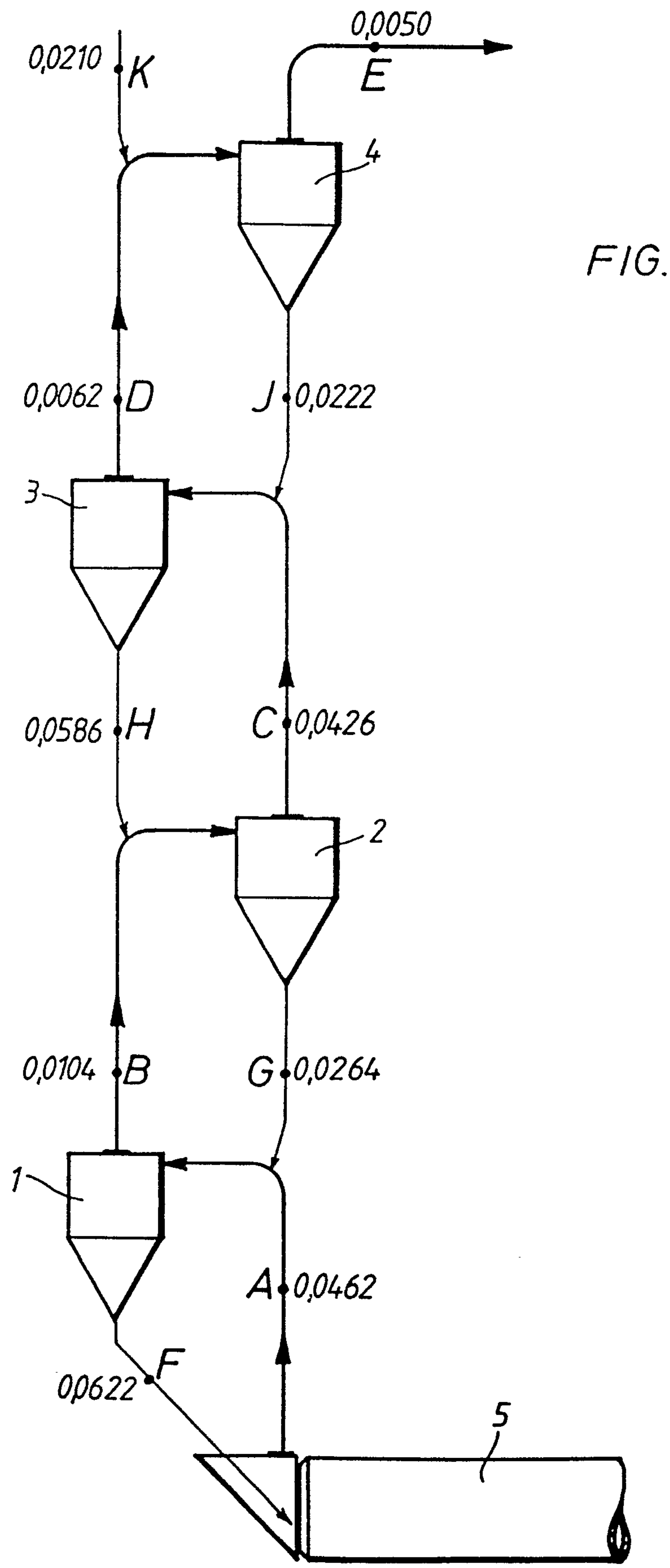
0,0210
K
0,0050
E
4
0,0062
D
J
0,0222
3
0,0586
H
C
0,0426
2
0,0104
B
G
0,0264
1
A
0,0462
0,0622
F
5

FIG. 1

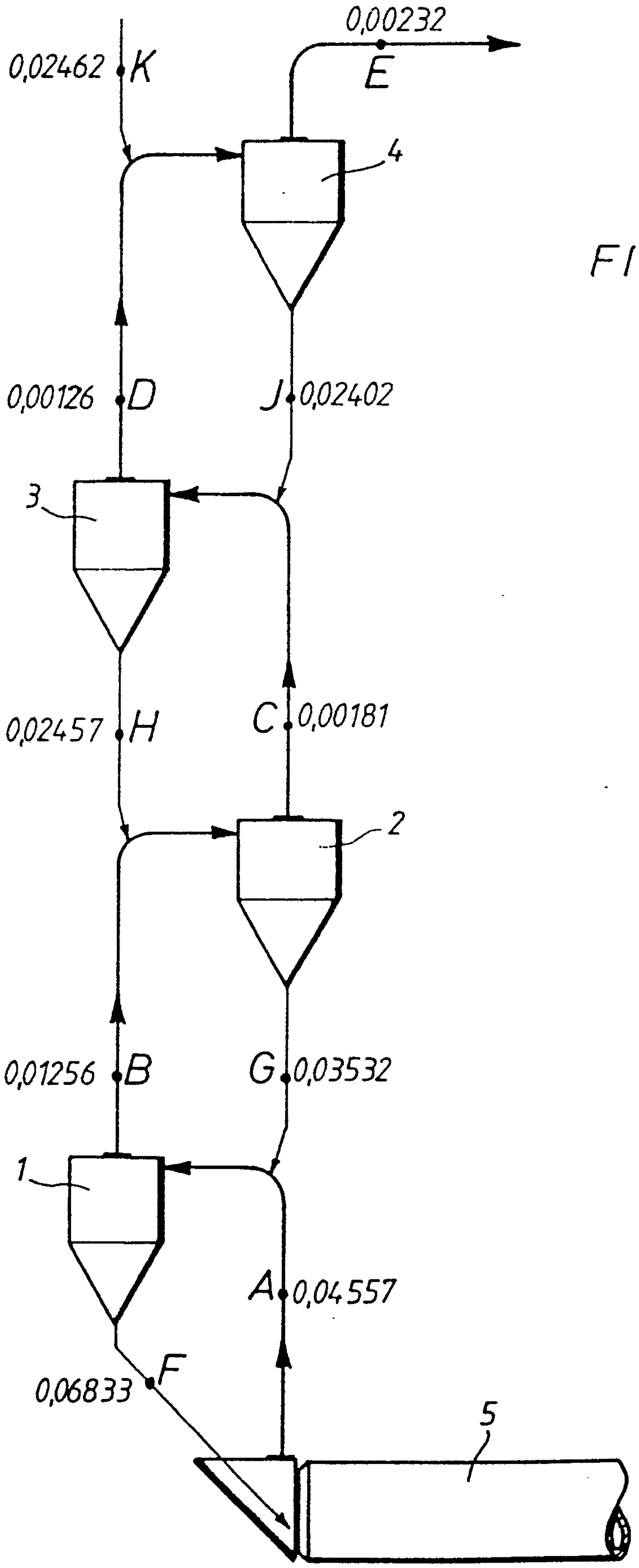
0,02462 K
0,00232
E
4
0,00126 D
J 0,02402
3
0,02457 H
C 0,00181
2
0,01256 B
G 0,03532
1
A 0,04557
0,06833 F
5

FIG.2

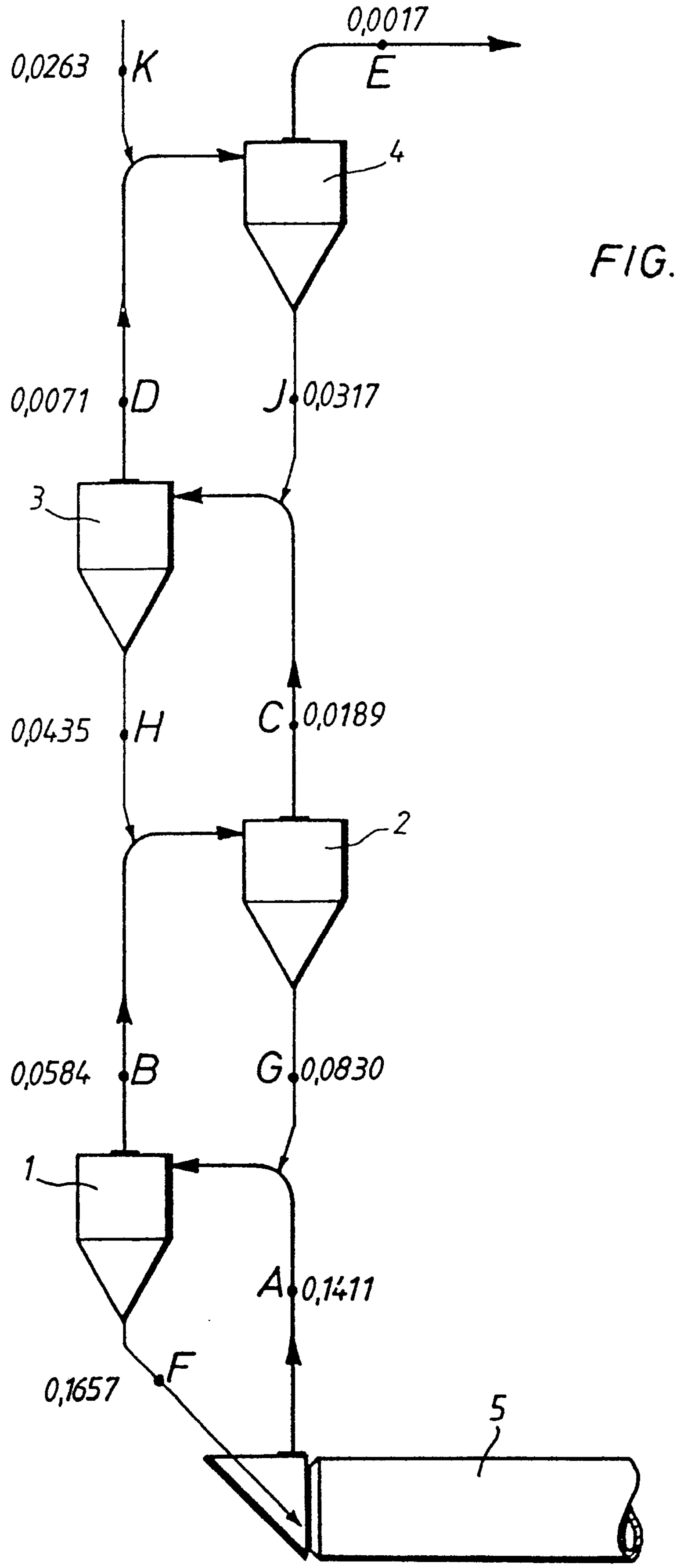
0,0263
K
0,0017
E
4
0,0071
D
J
0,0317
3
0,0435
H
C
0,0189
2
0,0584
B
G
0,0830
1
A
0,1411
0,1657
F
5

FIG.3

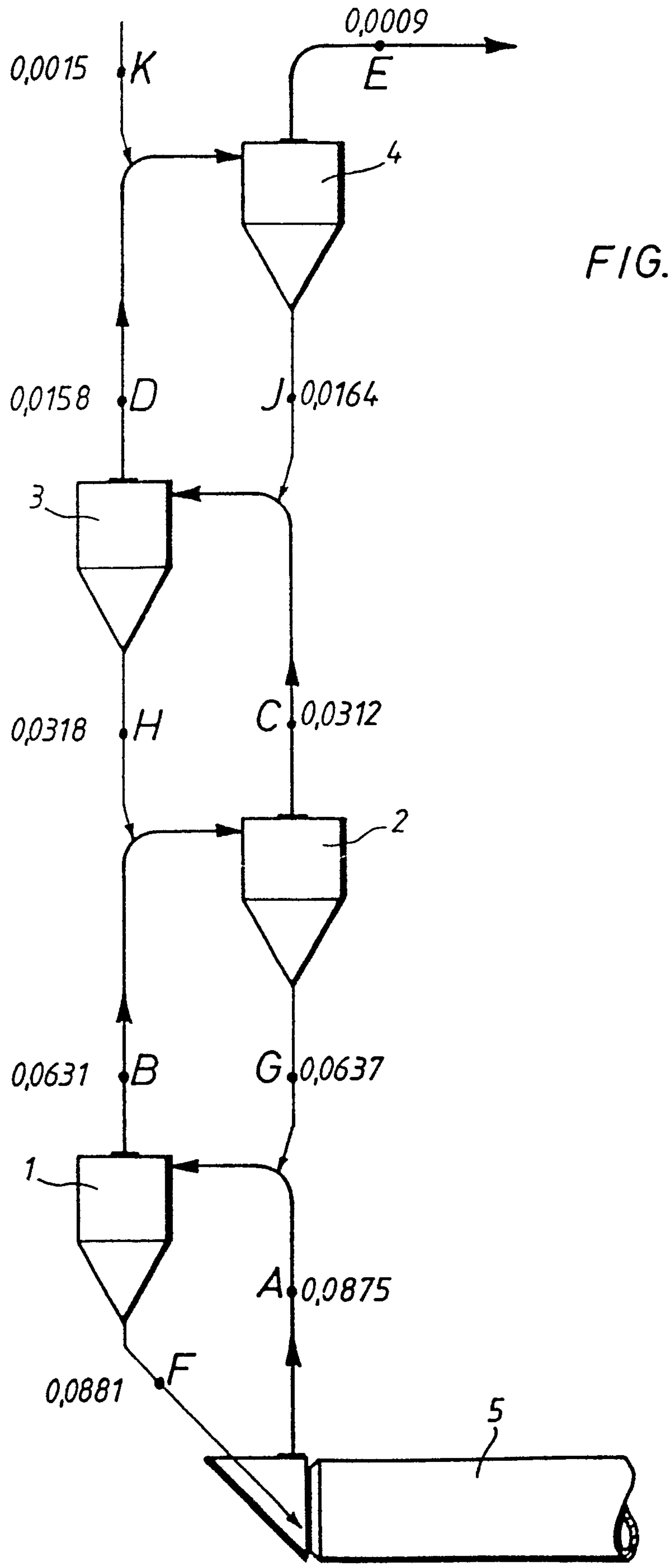
0,0015
K
0,0009
E
4
0,0158
D
J
0,0164
3
0,0318
H
C
0,0312
2
0,0631
B
G
0,0637
1
A
0,0875
0,0881
F
5

FIG.4

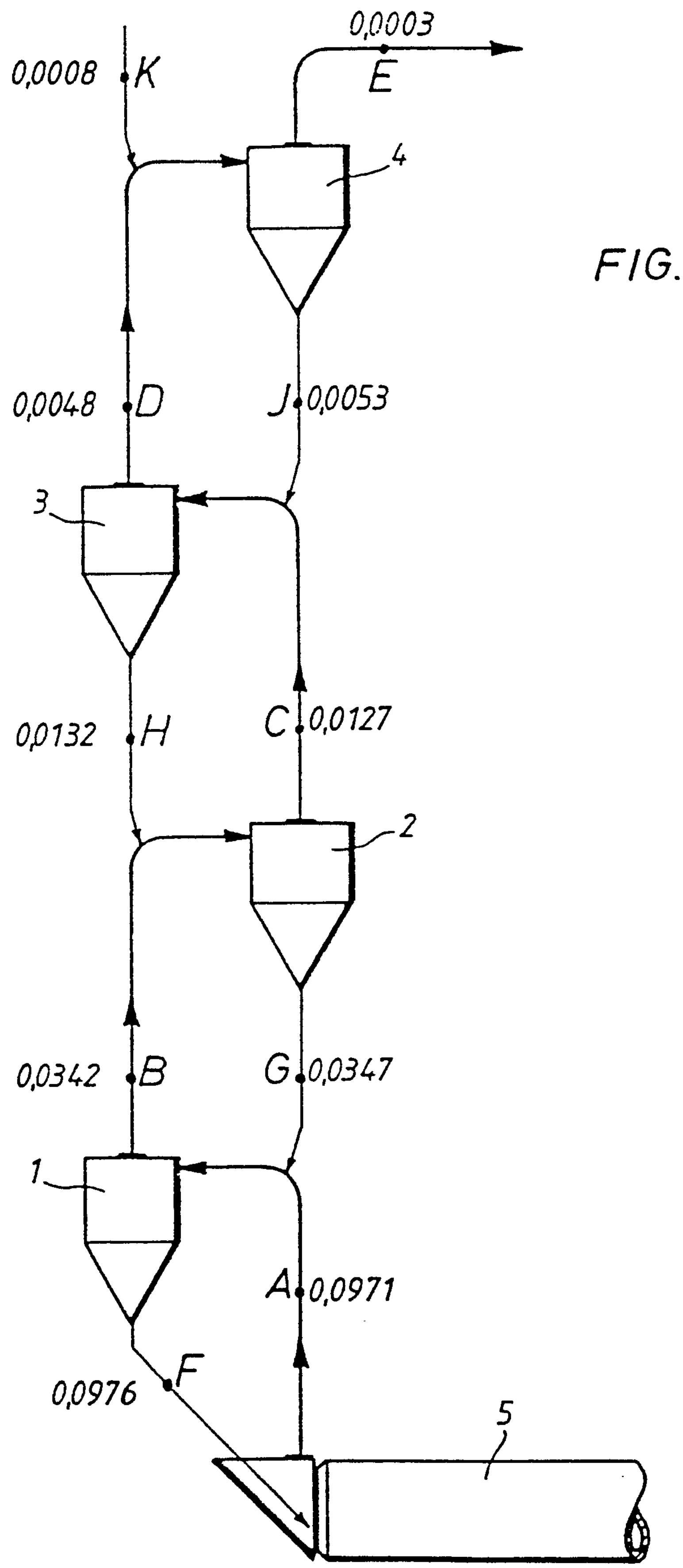
0,0008
K
0,0003
E
4
0,0048
D
J
0,0053
3
0,0132
H
C
0,0127
2
0,0342
B
G
0,0347
1
A
0,0971
0,0976
F
5

FIG. 5